## Europäisches Patentamt
## European Patent Office
## Office européen des brevets

(19)

(11) Veröffentlichungsnummer: **0 141 348**
**B1**

(12) # EUROPÄISCHE PATENTSCHRIFT

(45) Veröffentlichungstag der Patentschrift:
08.03.89

(51) Int. Cl.⁴: **F 16 N 29/04,** G 01 M 13/04

(21) Anmeldenummer: **84112585.9**

(22) Anmeldetag: **18.10.84**

(54) Verfahren und Einrichtung zur überwachung von Schmierstellen.

(30) Priorität: 22.10.83 DE 3338420

(43) Veröffentlichungstag der Anmeldung:
15.05.85 Patentblatt 85/20

(45) Bekanntmachung des Hinweises auf die Patenterteilung:
08.03.89 Patentblatt 89/10

(84) Benannte Vertragsstaaten:
AT BE CH FR GB IT LI NL SE

(73) Patentinhaber: SCHALLER- AUTOMATION
Industrielle Automationstechnik KG,
Industriering 14, D-6653 Blieskastel (DE)

(72) Erfinder: Maurer, Otto, Dr., Bussardweg 6, D-6729
Wörth (DE)
Erfinder: Schaller, Werner, Dipl.- Ing.,
Industriering 14, D-6653 Blieskastel (DE)

(56) Entgegenhaltungen:
EP-A-0 021 524
EP-A-0 029 736
DE-C-366 689
DE-C-825 178
US-A-3 487 467
US-A-4 121 460

V.D.I.-ZEITSCHRIFT, Band 118, Nr. 11, Juni 1976,
Seiten 517-524, V.D.I. Verlag, Düsseldorf, DE; H.
KRAUSE et al.: "Kontaktflächentemperaturen bei
technisch trockener Reibung und deren Messung"

EP 0 141 348 B1

**Beschreibung**

Die Erfindung bezieht sich auf ein Verfahren und eine Einrichtung zur Überwachung der Schmierung an der Berührungsstelle zwischen zwei durch den Schmierfilm gegeneinander isolierten, sich relativ zueinander bewegenden Teilen aus unterschiedlichen, elektrisch leitenden Werkstoffen, insbesondere zwischen einer sich drehenden Welle und einem Gleitlager.

Bei der Überwachung von Lagerstellen insbesondere an größerer Maschinen, wie z. B. von Kurbelwellenlagern an Schiffsdieselmotoren, ist es von Wichtigkeit, daß schon vor Beginn eines Lagerschadens sofort der Abriß der Schmierung angezeigt wird und Gegenmaßnahmen eingeleitet werden, damit es nicht zu einer Zerstörung des Lagers und der Kurbelwelle und dadurch zu einem Ausfall der Maschine mit den bekannten Folgeschäden kommt.

Bei Gleitlagern von Wellen können die beiden sich an der Schmierstelle berührenden Teile in einen durch die Schmierstelle selbst gehenden elektrischen Stromkreis mit einer in der äußeren Verbindung vorgesehenen Spannungsquellen gelegt werden, wobei der sich bei Abriß des Schmierfilms verringernde Stromkreiswiderstand als Signalgabe benutzt wird. Die in der äußeren Verbindung untergebrachte Spannungsquelle erzeugt hierbei den in dem Stromkreis über die Schmierstelle fließenden Strom.

Bei dieser Schmierstellenüberwachung treten trotz eines guten Schmierfilms laufend unschädliche und nur kurzzeitige metallische Kontakte zwischen der Welle und dem Lager auf, wodurch es zu Fehlalarmen kommen kann. Diese kurzzeitigen Kontakte machen sich dann unangenehm bemerkbar, wenn mehrere Lagerstellen gleichzeitig zu überwachen sind und die kurzzeitigen metallischen Kontakte sich statisch überlagern.

Zur Überwachung von Schmierstellen ist es bekannt, die Lagertemperatur mit den verschiedensten Thermofühlern zu ermitteln und bei unzulässig stark ansteigender Temperatur Alarm zu geben. Da solche Thermofühler nur punktual Temperatur aufnehmen können, und man außerdem mit diesen Fühlern aus Festigkeitsgründen nicht nahe genug an die Oberfläche der Lager herangehen kann, ergeben sich zeitliche Verzögerungen, bis der Wärmefluß von der Schadstelle zum Thermofühler gelangt ist.

Aus der VDI-Zeitschrift 118, 1978, Nr. 11, Seiten 517 - 524 ist es außerdem bekannt, daß kurzzeitige metallische Kontakte durch die Oberflächenrauhigkeit der sich gegeneinander bewegenden Teile, d.h. durch Mikrohügel gebildet werden, die im tausendstel Millimeterbereich liegen und kurzzeitig auftretende Thermospannungen erzeugen. Diese kurzzeitigen Thermospannungen sollen zur Messung der an den Mikrohügeln während der metallischen Berührung entstehenden Temperatur dienen.

Die einzelnen Mikrohügel werden bei der Berührung erhitzt, wobei Blitztemperaturen entstehen, deren Dauer weniger als 0,1 Millisekunden beträgt. Diese Blitztemperaturen an den Mikrohügeln können nur mit ganz schnellen Anzeigeelementen, wie z. B. einem Kathodenstrahloszilloskop angezeigt werden. Diese an den Mikrohügeln entstehenden Thermospannungen sind kein sicheres Indiz für ein einen Lagerschaden ankündigendes Schmierstoffversagen, da diese punktuellen Berührungen an den Mikrohügeln bei jeder normalen, einwandfrei geschmierten Gleitlagerstelle vorkommen.

An diesen Mikrohügeln wird nicht genügend Wärmeenergie freigesetzt, um die aufeinander gleitenden Teile soweit zu erhitzen, daß der zwischen den Gleitlagerteilen vorhandene Schmierstoff verdampft. Außerdem sind bei einem Gleitlager über die ganze Lagerfläche verteilt mehrere Mikrohügel gleichzeitig in Berührung, von denen ein Teil z. B. gerade die heiße Blitztemperatur erreicht hat, während ein anderer Teil zwar eben Kontakt erhält, aber noch nicht erhitzt ist, wodurch der an den erhitzten Mikrohügeln durch die Thermospannung erzeugte Strom, der über die nichterhitzten Mikrohügel kurzgeschlossen wird, nicht nach außen geführt werden kann. Eine zuverlässige Überwachung der Schmierung ist somit durch die Messung der Thermospannungen an den Mikrohügeln nicht möglich. Auch die Erfassung der mittleren Temperatur durch Messung der mittleren Thermospannung gibt keinen sicheren Aufschluß darüber, ob genügend Reibungswärme freigesetzt wird, die zu einem Erhitzungsschaden im Lager führen kann.

Aufgabe der Erfindung ist es, die Schmierstellen unter Ausnutzung der bei metallischer Berührung der Gleitlagerteile entstehenden Thermospannung so zu überwachen, daß erst bei echter Beschädigungsgefahr für die Gleitlagerteile eine zuverlässige Schmiermangelanzeige erfolgt und Fehlalarme mit Sicherheit vermieden werden.

Die Lösung dieser Aufgabe erfolgt mit den Merkmalen des Anspruchs 1 bzw. des Anspruchs 5.

Das signalbestimmende Thermoelement an der Berührungsstelle wird z. B. bei einem Wellengleitlager durch die aus Stahl bestehende Welle und die auf der Lagerschale aufgebrachte und in der Regel aus Weißmetall bestehende Gleitschicht gebildet. Dadurch, daß die äußere elektrische Verbindung des Stromkreises als niederohmiger Widerstand ausgebildet ist, kann nur an einer im Gefahrenfalle vorhandenen großflächigen und damit niederohmigen Berührungsstelle durch die an dieser Stelle auftretende Umwandlung von Reibungsenergie in Hitze ein genügend kräftiger Stromfluß erzeugt werden, der an dem Widerstand der äußeren niederohmigen Verbindung einen genügend großen, eine Auswertung ermöglichenden Spannungsabfall hervorruft. Der Widerstandswert der äußeren niederohmigen Verbindung ist hierbei an die großflächige Berührungsstelle angepaßt.

Die erfindungsgemäße Schmierstellenüberwachung ist außerordentlich sicher gegen Fehlalarme, weil sie nur anspricht, wenn einerseits der Stromkreis infolge der beim Schmierfilmabriß auftretenden metallischen Berührung von Welle und Weißmetall-Lagerschicht niederohmig wird und andererseits infolge der hierbei auftretenden Reibungshitze an der Berührungsstelle gleichzeitig eine anhaltende Thermospannung entsteht. Dadurch, daß diese beiden Effekte zusammen auftreten, fließt nur im Störungsfalle in dem beim Schmierfilmabriß niederohmigen Stromkreis ein das Alarmsignal auslösender Thermostrom.

Durch die enormen Kräfte, die normalerweise auf die Lager ausgeübt werden, entstehen beim Schmierfilmabriß sehr hohe Reibungskräfte, die ein großes Temperaturgefälle erzeugen, weil die Wärme aus dem Erzeugungspunkt an der metallischen Berührungsstelle nicht so schnell in die anschließenden Teile des Lagers abfließen kann, wie neue Wärme zugeführt wird. Infolge dieses Temperaturgefälles ist die auftretende Differenz-Thermospannung und damit der durch den niederohmigen Stromkreis fliessende Signalstrom entsprechend hoch, so daß im Störfalle ein kräftiges und eindeutiges Alarmsignal abgegeben wird. Die Signalabgabe erfolgt jetzt auch verzögerungsfrei, da in dem Augenblick des Schmierfilmabrisses an der punktualen Berührungsstelle sofort eine hohe Temperatur auftritt, die schlagartig die Thermospannung im Stromkreis hervorruft.

Bei der Erfindung wird davon ausgegangen, daß unterschiedliche Metalle, die sich großflächig berühren, normalerweise kein praktisch auswertbares Thermoelement bilden können, das eine verwertbare Spannung erzeugt, da hierfür über die gesamte Fläche der aufeinanderliegenden Teile die das Thermosignal erzeugende Temperatur herrschen müßte. Wegen der nicht zu vermeidenden unterschiedlichen Temperaturen an den verschiedenen Punkten der Großflächenberührung würden sich nämlich hier die verschiedenen Thermospannungen intern kurzschließen. In überraschender Weise hat der Erfinder erkannt, daß dies auf Lagerstellen nicht zutrifft, weil dort auch bei großflächiger Berührung der beiden unterschiedlichen Werkstoffe, z. B. der Welle und des Lagers, eine Erhitzung beim Abriß des Schmierfilms zunächst nur örtlich auftritt, wobei der Schmierfilm außerhalb dieser zunächst noch kleinen Berührungsstelle immer noch vorhanden ist, so daß durch die Isolationswirkung des Schmierfilms ein elektrischer Kurzschluß der an dieser Berührungsstelle entstehenden Thermospannung verhindert wird. Dadurch ist es möglich, die Thermospannung zur Schmierstellenüberwachung nach außen hin abzunehmen.

Es hat sich gezeigt, daß auch bei einwandfreier Schmierung an der Überwachungsstelle Störspannungen im Stromkreis auftreten können. Hierbei kann es sich beispielsweise um galvanische Spannungen handeln, die dadurch erzeugt werden, daß das Schmiermittel mit den verschiedenen Metallen ein galvanisches Element bildet. Diese Störspannungen entstehen in hochohmigen Spannungsquellen und können das Vorhandensein von Thermospannungen vortäuschen. Um diese Störspannungen zu eliminieren, wird der Stromkreis über den vorbestimmten niederohmigen Widerstand in der äußeren Verbindung kurzgeschlossen. Die Ströme, die aus den hochohmigen Spannungsquellen im Stromkreis fließen, sind sehr klein und erzeugen deshalb an dem niederohmigen Widerstand der äußeren Verbindung nur einen geringen Spannungsabfall, der als Störspannung unbedeutend ist. Das niederohmige Thermoelement dagegen erzeugt im Falle eines Schmierfilmabrisses einen sehr hohen Signalstrom, der einen entsprechend hohen Spannungsabfall an der äußeren Verbindung im Stromkreis hervorruft, wodurch das Verhältnis von Signalnutzspannung zur Störspannung sehr groß wird.

Der Spannungsabfall am elektrischen Widerstand der äußeren Verbindung des Stromkreises wird gemessen und beim Ansteigen des Spannungsabfalls über einen vorgegebenen Schwellwert wird ein Alarm- oder Schaltsignal ausgelöst. Tritt ein Abriß des Schmierfilms ein und steigt die entstandene Thermospannung über den vorgegebenen Schwellwert an, so wird durch die dann erfolgende Alarmauslösung sichergestellt, daß Gegenmaßnahmen getroffen werden können, bevor ein durchgreifender Lagerschaden eingetreten ist. Mit dem Alarm kann auch gleichzeitig durch das Schaltsignal der Antrieb für das bewegliche Teil an der Lagerstelle selbsttätig gedrosselt oder abgeschaltet werden.

Die Alarmgabe wird bei Überschreitung des Schwellwertes durch kurzzeitig auftretende Spannungsspitzen solange unterdrückt, bis eine vorbestimmte zeitliche Häufigkeit mit ansteigender Tendenz der Amplitude auftritt, so wird eine zusätzliche Sicherheit gegen Fehlalarme auch für den Fall erreicht, daß kurzzeitige und deshalb unschädliche metallische Beruhrüngen der beiden Lagerteile Thermospannungen hervorrufen.

Die kräftige Signalabgabe kann gemäß Anspruch 2 noch dadurch erhöht werden, daß auch der Wärmefluß von der Berührungsstelle über das Weißmetallager zur Bronzeschale und von dort zum Zagerbock zur Ereugung zusätzlicher sich addierbar Differenz-Thermospannungen benutzt wird.

Sollen mehrere in einer gemeinsamen Baueinheit untergebrachte Schmierstellen, z. B. die Lagerstellen der Kurbelwelle eines Mehrzylindermotors oder auch mehrere getrennte Lager, wie z. B. Motor und Getriebe, gleichzeitig im Stromkreis überwacht werden, so wird das Überwachungsverfahren nach Anspruch 4 vorgeschlagen. Hier weist der Stromkreis für die gemeinsame Erfassung aller Lager mehrere über die einzelnen Schmierstellen gehende parallelgeschaltete Zweige auf und nach einer Alarmgabe wird das den Alarm auslösende Lager in einfacher Weise durch Messung und Vergleich der einzelnen Lagertemperaturen ermittelt.

Verwendet man hierbei für die anschließende Feststellung und den Vergleich der einzelnen Lagertemperaturen jeweils einen zwischen den feststehenden Lagerteilen und dem Gehäuse bzw. den Lagerträgern eingesetzten Kupferdraht nach den Merkmalen des Anspruchs 5 zur Bildung eines Thermoelement-Stromkreises, so wird die Detektion mit einfachsten Mitteln möglich und es fließt nur in dem Kupferdraht des den Alarm auslösenden Lagers ein gegenüber den anderen Lagern nennenswert höherer Signalstrom, der unmittelbar zur Anzeige der Schadensstelle benutzt werden kann.

Bei der Schmierstellenüberwachung an Wellenlagern ist der Stromkreis normalerweise über einen an der umlaufenden Welle anliegenden Schleifkontakt zur äußeren Verbindung hin zu schließen. Da an diesem Schleifkontakt besonders durch hohe Drehzahlen und bei großen Wellendurchmessern ein unerwünschter Verschleiß auftritt, wird weiterhin vorgeschlagen, den Stromkreis über ein elektrisch leitendes und an der Welle abrollendes Stufenrad gemäß den Merkmalen des Anspruchs 6 zu schliessen. Durch dieses leitende Stufenrad läßt sich die Umfangsgeschwindigkeit am Schleifkontakt um ein Vielfaches verringern, so daß der Verschleiß und damit die auftretenden elektrischen Widerstandsänderungen am Schleifkontakt niedrig gehalten werden können.

Um den Meßeffekt unabhängig von der Polung der Thermospannungen und den Thermowerten der jeweiligen Werkstoffpaarung zu machen, wird außerdem im Anspruch 7 vorgeschlagen, an den Stromkreis einen Verstärker anzuschließen, der unabhängig von der Polung im Stromkreis ein positives Signal abgibt.

Da der im niederohmigen Stromkreis fließende Thermostrom sehr große Werte annehmen kann, ist es auch möglich, das Magnetfeld dieses Thermostromes als Meßeffekt zu benutzen. Zu diesem Zweck wird entsprechend dem Merkmal des Anspruchs 8 anstelle des Widerstandes die niederohmige Spule eines Relais in die äußere Verbindung des Stromkreises eingebaut. Dieses Relais ist so eingestellt, daß es bei einem bestimmten Strom anspricht.

Die Erfindung wird anhand von Ausführungsbeispielen in der Zeichnung näher erläutert. Es zeigen

Fig. 1 die Kurbelwellenlagerung eines Mehrzylindermotors im Längsschnitt mit dem über die äußere Verbindung geschlossenen Stromkreis,

Fig. 2 eine der Lagerstellen nach Fig. 1 in vergrößertem Maßstab,

Fig. 3 eine schematische Darstellung der Kurbelwelle mit den Lagern, die zur Detektion des mangelhaften Lagers jeweils einen Kupferdraht tragen,

Fig. 4 den Abgriff an der Welle über ein elektrisch leitendes Stufenrad und

Fig. 5 ein Diagramm über den im Stromkreis einer Lagerstelle gemessenen Thermostrom.

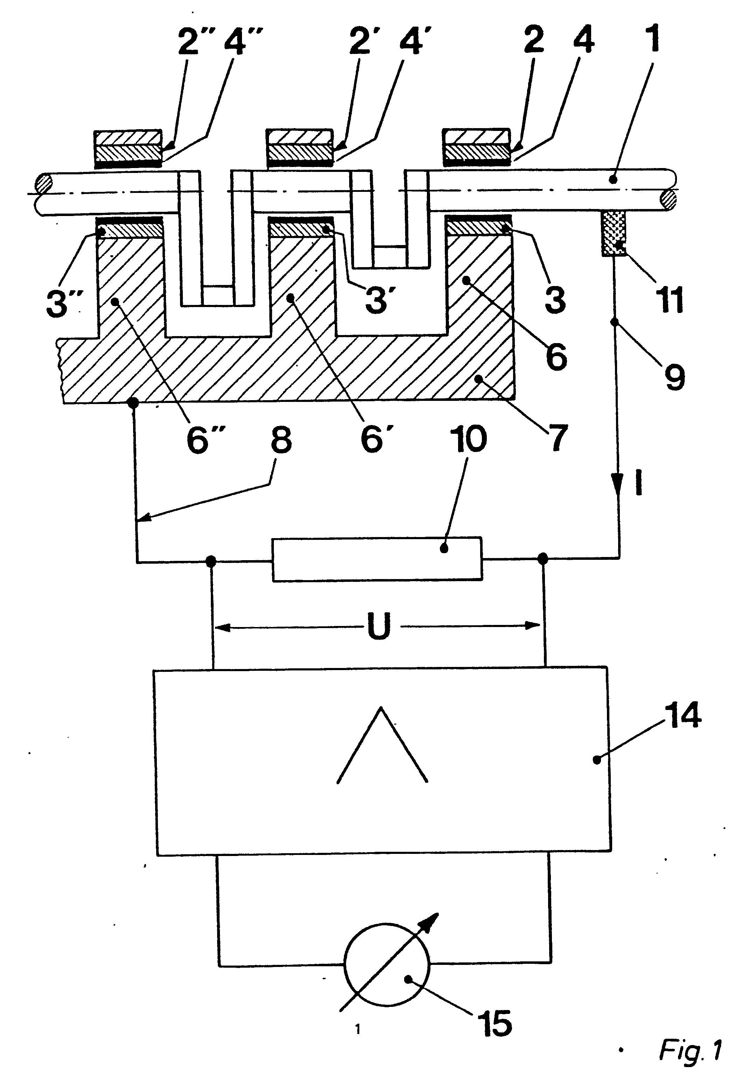

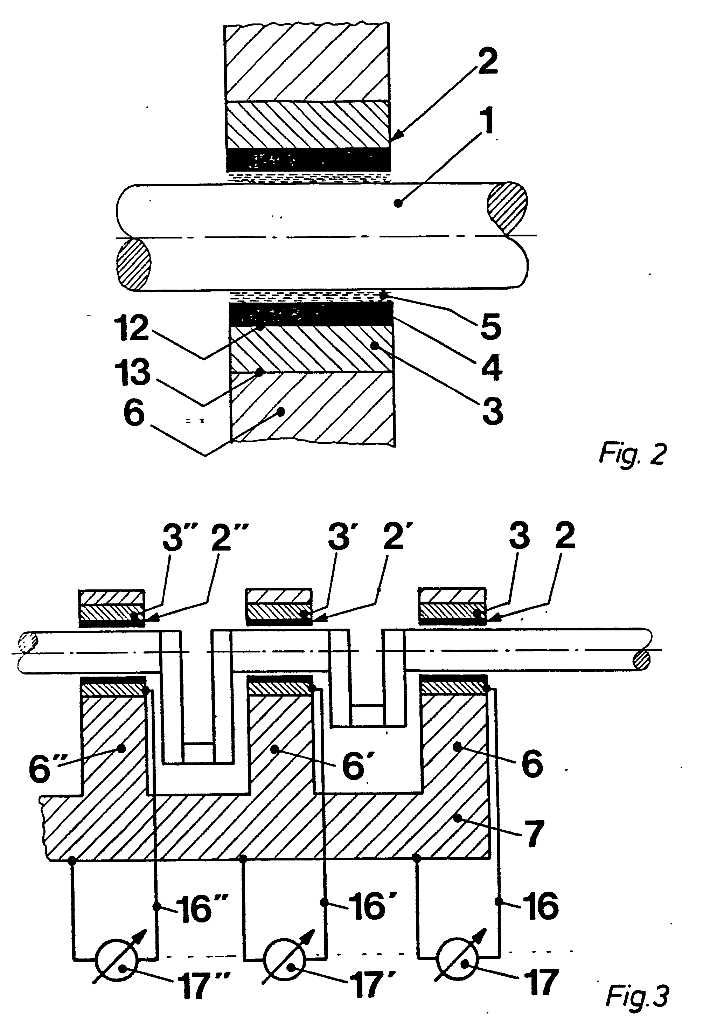

Eine in den Fig. 1 und 2 gezeigte Kurbelwelle 1 eines Kurbeltriebs für einen nicht näher dargestellten Mehrzylinder-Kolbenmotor ist in Lagern 2, 2' und 2"mit Gleitlagerschalen 3, 3' und 3" gelagert. Zur Erzielung guter Gleiteigenschaften sind die Gleitlagerschalen auf ihrer an der Welle 1 anliegenden Seite mit einer Weißmetallschicht 4, 4' und 4" ausgekleidet, wobei ein zwischen dieser Weißmetallschicht 4 und der Welle 1 vorhandener Schmierfilm 5 ein Heißlaufen der Lager verhindert. Die Gleitlagerschalen 3, 3', 3" werden von Lagerböcken 6, 6', 6" getragen, die mit einem gemeinsamen Gehäuse 7 einteilig sind.

Zur Überwachung der Schmierstellen 5 liegen die Lagerstellen 3, 4 und die Welle 1 in einem durch die Schmierstellen 5 gehenden elektrischen Stromkreis 8, der über eine äußere Verbindung 9 mit hierin eingebautem niederohmigen Widerstand 10 kurzgeschlossen ist. Die äußere elektrische Verbindung 9 ist einerseits an das leitende Gehäuse 7 angeklemmt und steht andererseits über einen Schleifer 11 leitend mit der Stahlwelle 1 in Verbindung. Alle Schmierstellen 5 der Lager 2, 2' und 2" können hierbei gleichzeitig überwacht werden, da der Stromkreis 8 mehrere über die Schmierstellen 5 gehende, parallel geschaltete Stromzweige aufweist, die durch die verschiedenen Lagerböcke 6, 6',6" mit den metallischen Gleitlagerschalen 3, 3', 3" und den Weißmetallschichten 4, 4', 4" gebildet werden.

Tritt im Störfalle an einer der Schmierstellen 5 ein Schmierfilmabriß auf, so wird der Stromkreis wegen der in diesem Stromzweig auftretenden metallischen Berührung von Welle 1 und Weißmetallschicht 4 niederohmig und infolge der hierbei erzeugten Reibungshitze entsteht gleichzeitig zwischen der aus Stahl bestehenden Welle 1 und der Weißmetallschicht 4 des Lagers 2 eine hohe Thermospannung, die im wesentlichen der Reibungsleistung proportional ist. Diese Thermospannung kann noch durch an einer Übergangsstelle 12 zwischen der Weißmetallschicht 4 und der aus einem anderen Metallwerkstoff bestehenden Lagerschale 3 und an einer Übergangsstelle 13 zwischen der Lagerschale 3 und dem im Werkstoff unterschiedlichen Lagerbock 6 auftretende Thermospannungen in Abhängigkeit vom Wärmefluß und von der Werkstoffpaarung unterstützt werden.

Durch die erzeugte Thermospannung fließt in dem niederohmig gewordenen Stromkreis 8 ein Thermostrom I, der an dem Widerstand 10 einen Spannungsabfall U auslöst. Dieses Signal wird über einen Verstärker 14 einem Anzeigegerät 15 zugeführt, das bei Überschreiten eines Schwellwertes das Alarmsignal und gegebenenfalls ein Schaltsignal für den Motor abgibt.

Um festzustellen, welches der Lager den Alarm ausgelöst hat, sind an den in der Fig. 3 dargestellten Lagern 2, 2' und 2" Kupferdrähte 16, 16', und 16" vorgesehen, die Spannungsmesser 17, 17' und 17" tragen. Diese Kupferdrähte 16 sind einerseits an der aus einem anderen Werkstoff bestehenden Lagerschale 3 und andererseits an dem von der Schmierstelle 5 entfernterliegenden Gehäuse 7 angeklemmt und bilden so einen Thermoelement-Stromkreis. Nur in dem Kupferdraht des den Alarm auslösenden Lagers fließt jetzt infolge der Temperaturdifferenz ein nennenswert höherer Signalstrom, der die Schadensstelle unmittelbar anzeigt.

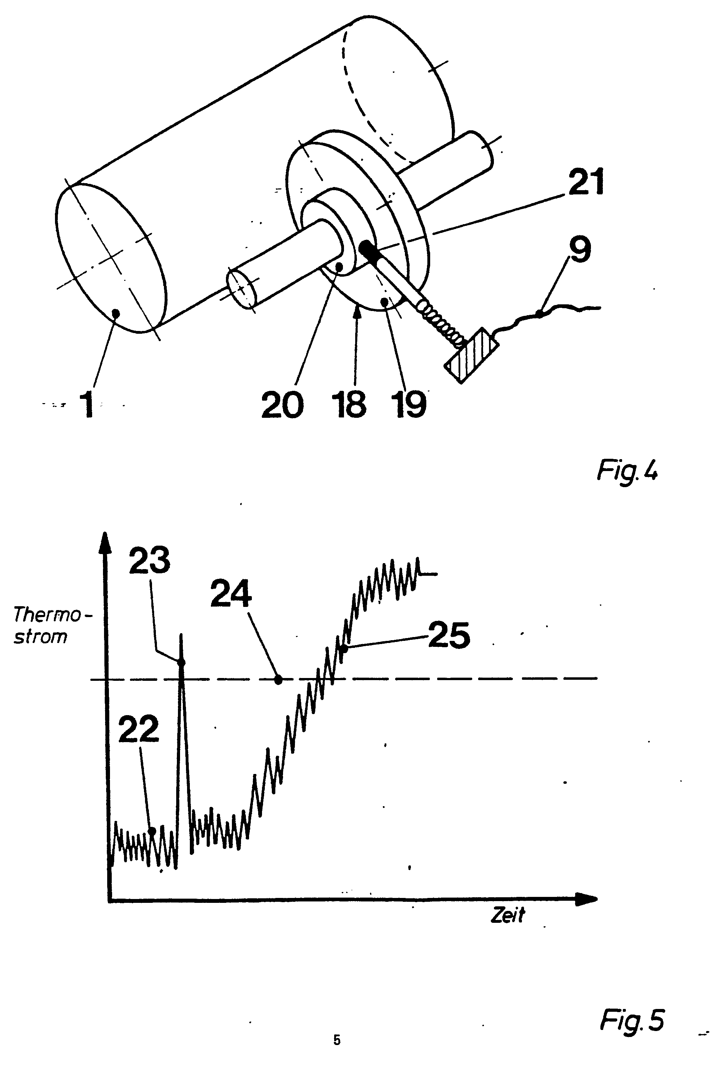

Bei dem Ausführungsbeispiel nach Fig. 4 rollt ein dargestelltes elektrisch leitendes Stufenrad 18 mit seiner großen Radstufe 19 am Umfang der Welle 1 ab und trägt eine kleine Radstufe 20, an dem ein federnd gelagerter Schleifkontakt 21 angreift. Der Schleifkontakt 21 ist an die äußere Verbindung 9 des Stromkreises 8 angeschlossen und die leitende Verbindung zur Welle 1 wird über den an der Welle abrollenden Mantel der großen Radstufe 19 hergestellt.

Aus dem in der Fig. 5 dargestellten Diagramm über den im Stromkreis einer Lagerstelle gemessenen Thermostrom ist zu ersehen, daß bei einwandfreiem Schmierfilm an der Lagerstelle in dem Stromkreis 8 lediglich ein ganz geringer, auf Störspannungen zurückzuführender Strom 22 fließt. Tritt eine nur kurzzeitige und daher unschädliche metallische Berührung zwischen der Weißmetallschicht 4 und der Welle 1 auf, so wird eine hierdurch ausgelöste kurzzeitige Stromspitze 23 auch bei Überschreitung eines Schwellwertes 24 unterdrückt. Ist dagegen der Schmierfilm abgerissen, so häufen sich die Stromspitzen und der Thermostrom steigt entsprechend einem Kennlinienabschnitt 25 stark an, so daß jetzt durch Überschreitung des Schwellwertes 24 der Alarm ausgelöst wird.

Wird eine weitere Wärmeentwicklung durch die an der Lagerstelle ergriffenen Maßnahmen unterbunden, so geht die Thermospannung bzw. der Thermostrom sehr schnell zurück, wodurch das Einsetzen der Schmierung leicht beobachtet werden kann. Wie Versuche bestätigt haben, bewirkt die erhöhte Lagertemperatur selbst keine nennenswerte Thermospannung.

**Patentansprüche**

1. Verfahren zur Überwachung der Schmierung an der Berührungsstelle zwischen zwei durch den Schmierfilm gegeneinander isolierten, sich relativ zueinander bewegenden Teile aus unterschiedlichen, elektrisch leitenden Werkstoffen, insbesondere zwischen einer sich drehenden Welle und einem Gleitlager, wobei die beiden Teile in einem durch die Schmierstelle selbst gehenden elektrischen Stromkreis mit Spannungsquelle und äußerer Verbindung liegen, und der sich bei Abriß des Schmierfilms verringernde Stromkreiswiderstand als Signalgabe benutzt wird, wobei die beim Abriß des Schmierfilms an der Berührungsstelle durch die Reibungswärme auftretende Thermospannung als Spannungsquelle benutzt wird, um erst beim Auftreten einer durch Schmiermangel hervorgerufenen großflächigen und einen Hitzeschaden ankündigenden metallischen Berührung der beiden Gleitlagerteile über die äußere elektrische Verbindung des Stromkreises, die als niederohmiger, der großflächigen Berührungsstelle angepaßter Widerstand ausgebildet ist, einen kräftigen Stromfluß zu erzeugen, und der an dem Widerstand der äußeren Verbindung auftretende Spannungsabfall gemessen und dazu verwendet wird, ein Alarm- und/oder Schaltsignal auszulösen, wobei im Falle von kurzzeitig auftretenden Spannungsspitzen die Alarmgabe solange unterdrückt wird, bis eine vorherbestimmte zeitliche Häufigkeit der Spannungsspitzen und/oder eine ansteigende Tendenz der Amplituden auftritt.

2. Überwachungsverfahren nach Anspruch 1, dadurch gekennzeichnet, daß die Thermospannung, die den über die niederohmige äußere Verbindung fließenden Strom erzeugt, nicht nur allein aus der metallischen Berührung der beiden Gleitlagerteile hervorgerufen wird, sondern auch an sonstigen Übergangsstellen zwischen unterschiedlichen Werkstoffen der Lagerstelle durch den abfließenden, durch die Reibung erzeugten Wärmefluß entsteht.

3. Überwachungsverfahren nach den Ansprüchen 1 und 2, dadurch gekennzeichnet, daß das Alarm- und/oder Schaltsignal ausgelöst wird, wenn der am niederohmigen Widerstand gemessene Spannungsabfall einen vorgegebenen Schwellwert übersteigt.

4. Überwachungsverfahren nach einem oder mehreren der Ansprüche 1 bis 3 für die gleichzeitige Überwachung mehrerer in einer gemeinsamen Baueinheit oder getrennt angeordneter Schmierstellen, dadurch gekennzeichnet, daß der Stromkreis mehrere über die einzelnen Schmierstellen gehende, parallel geschaltete Zweige aufweist und das das Alarmsignal auslösende Lager durch Messung und Vergleich der einzelnen Lagertemperaturen ermittelt wird.

5. Einrichtung zur Durchführung des Überwachungsverfahrens nach Anspruch 4, dadurch gekennzeichnet, daß zwischen den feststehenden Lagerteilen (3, 4) der Schmierstellen (5) und einem von der Schmierstelle entfernter liegenden Gehäuse (7) bzw. Lagerträgern jeweils ein mit einem elektrischen Widerstand zur Messung des Spannungsabfalls oder mit einem Spannungsmesser (17) versehener Draht (16) aus einem gegenüber dem Werkstoff der Lagerteile unterschiedlichen Werkstoff, insbesondere aus Kupfer eingesetzt ist.

6. Einrichtung zur Schmierstellenüberwachung nach einem oder mehreren der Ansprüche 1 bis 5 an Wellenlagern, dadurch gekennzeichnet, daß der Stromkreis (8) über ein elektrisch leitendes Stufenrad (18) geschlossen wird, dessen große Radstufe (19) am Umfang der Welle (1) abrollt und an dessen kleiner Radstufe (20) ein an die äußere Verbindung (8, 10, 9, 11) des Stromkreises angeschlossener Schleifkontakt (21) angreift.

7. Einrichtung zur Schmierstellenüberwachung nach einem oder mehreren der Ansprüche 1 bis 6, dadurch gekennzeichnet, daß an den Stromkreis (8) ein Verstärker (14) angeschlossen ist, der unabhängig von der Polung im Stromkreis ein positives Signal abgibt.

8. Einrichtung zur Schmierstellenüberwachung nach einem oder mehreren der Ansprüche 1 bis 7, dadurch gekennzeichnet, daß die niederohmige Spule eines Relais in die äußere Verbindung (9) des Stromkreises (8) eingebaut ist.

## Claims

1. A process to monitor the lubrication at the point of contact between two parts which move relative to one another and which are isolated against one another by the lubricant, the parts being of materials with different electrical conductivities, in particular between a rotating shaft and a slide bearing, whereby both parts are located in an electrical circiut with supply point and external connection which passes through the point of lubrication itself, and the circiut resistance, which decreases through the abrasion of the lubrication film, is used for a signal transmission. The thermal voltage, which occurs as a result of frictional heat during the abrasion of the lubricating film at the point of contact, is used as a supply point to generate a powerfull current conduction across the circuit's external electrical connection, which is designed as a low impedance resistance adapted to the large-area point of contact, only when a large-scale metallic contact takes place between the slide bearing parts, caused by a lack of lubricant and signalling a thermal damage. This current conduction is measured by the potential drop occuring at the external connection's resistance and is used to trigger an alarm and/or switch signal, whereby in the event of short-duration spikes the alarm signal is suppressed until a predetermined temporal frequency of the spikes occurs and/or an increasing tendency of the amplitudes appears.

2. Monitoring process in accordance with claim 1, characterized by the fact that the thermal voltage which generates the current flowing over the low impedance external connection is produced not only by the metallic contact of both slide bearing parts, but also arises at other points of transfer between different bearing materials as a result of the discharging heat flux produced through friction.

3. Monitoring process in accordance with claims 1 and 2, characterized by the fact that the alarm and/or switch signal is triggered if the potential drop measured at the low impedance resistance exceeds a preset limit value.

4. Monitoring process in accordance with one or more of the claims 1 to 3 for the simultaneous monitoring of a number of points of lubrication arranged either in a joint component or separately, characterized by the fact that the circuit displays a number of parallel switched branches which pass through the individual points of lubrication, and that the bearing which triggers the alarm signal is determined by measurement and comparison of the individual bearings temperatures.

5. Device to carry out the monitoring process in accordance which claim 4, characterized by the fact that a wire (16) of a different material to that of the bearing parts, in particular of copper, and which is provided either with an electrical resistance to measure the potential drop or a voltmeter, is inserted between each of the fixed bearing parts (3, 4) of the points of lubrication (5) and a cover (7) or bearing supports located further away from the point of lubrication.

6. Device to monitor points of lubrication in accordance with one or more of the claims 1 to 5 in shaft bearings, characterized by the fact that the circuit (8) is closed via an electrically conducting step wheel (18) whose large wheel step (19) rolls around the circumference of the shaft (1) and on whose small wheel step a rubbing contact, (8, 10, 9, 11) which is connected to the circuit's external connection, engages.

7. Device to monitor points of lubrication in accordance with one or more of the claims 1 to 6, characterized by the fact that an amplifier (14) is connected into the circuit (8), which emits a positive signal irrespective of the polarity in the circuit.

8. Device to monitor points of lubrication in accordance with one or more of the claims 1 to 7 characterized by the fact that the low impedance coil of a relay is installed in the external connection (9) of the circuit (8).

## Revendications

1. Processus de surveillance de la lubrification au point de contact entre deux pièces en matériau de conductibilité électrique différente, isolées l'une de l'autre par un film lubrifiant et se déplacant l'une vers l'autre dans un mouvement relatif - en particulier au point de contact entre un arbre à cames et un palier de glissement, les deux pièces étant reliées entre elles par l'intermédiaire de la zone de contact par un circiut électrique autonome et, connectées à une source de tension et à un circiut extérieur; la résistance du circuit électrique, baissant en cas de rupture du film lubrifiant est transformée en signal d'alarme; ce faisant la tension thermique, produite lors de la rupture du film lubrifiant sur la zone de contact par la chaleur de friction est utilisée comme source de tension pour produire seulement en cas de frottement sur une large surface des deux pièces métalliques du palier de glissement, frottement provoqué par un manque de lubrification et annonçant un dégât résultant de la chaleur de friction, par l'intermédiaire de la connection au circuit électrique extérieur comportant une résistance à bas potentiel ohmique et adapté à la large surface de friction, une puissante conduction de courant; la chute de tension provoquée et mesurée à la résistance du circuit extérieur est utilisée pour déclancher un signal d'alarme et/ou un signal de commutation; en cas d'apparition brève des pointes de tension, le signal d'alarme est retenu jusqu'à ce que ces pointes de tension se manifestent avec une fréquence préfixée et/ou qu'elles accusent une tendance à l'aumentation d'amplitude.

2. Processus de surveillance selon la revendication 1, caractérisé par le fait que la tension thermique qui produit le courant circulant au niveau du circuit extérieur à bas potentiel ohmique n'est pas exclusivement provoquée par le contact des surfaces métallique entre elles des deux pièces du palier de glissement, mais elle provient également du flux thermique engendré par la friction en tous autres points de jonction entre deux parties du palier d'appui constituées des matériaux différents.

3. Processus de surveillance selon les revendications 1 et 2 caractérisé par le fait que le signal d'alarme et/ou le signal de commutation est déclanché lorsque la chute de tension mesurée à la résistance à bas potentiel ohmique dépasse une valeur-seuil préfixée.

4. Processus de surveillance selon une ou plusieurs revendications de 1 à 3 pour le contrôle simultané de plusieurs points de lubrification isolés ou disposés dans un élément unique de construction caractérisé par le fait que le circuit de courant présente plusieurs branchements parallèles conduisant aux divers points de lubrification et que le palier d'appui qui a déclanché l'alamre est déterminé par la mesure et la comparaison entre elles des variations de températures des différents paliers d'appui.

5. Dispositif pour la mise en marche du processus de surveillance selon la revendication 4 caractérisé par le fait que un cable (16), dans une matière différente de celle des éléments du palier d'appui - en général en cuivre - et muni d'une résistance électrique pour mesurer la chute de tension ou muni d'un tensiomètre (17), est placé respectivement entre les parties fixes du palier d'appui (3, 4) des points de lubrification (5) et le boîtier (7), éloigné du point de lubrification ou des paliers d'appui.

6. Dispositif pour la surveillance des points de lubrification aux chaises de lignes d'arbres selon une ou plusieurs des revendications de 1 à 5 caractérisé par le fait que le circuit du courant (8) est fermé par une roue à gradins (18) conductrice de courant, dont le gradin au diamètre le plus large (19) roule au contact de la périphérie de l'arbre (1) et dont le plus petit gradin (20) est appliqué à un curseur à frottement relié à la connection du circuit électrique extérieur (8, 10, 9, 11).

7. Dispositif pour la surveillance des points de lubrification selon une ou plusieurs des revendication de 1 à 6, caractérisé par le fait que un amplificateur (14), qui indépendamment de la polarisation produit un signal positif, est raccordé au circuit du courant (8).

8. Dispositif pour la surveillance des points de lubrification selon une ou plusieurs des revendications de 1 à 7, caractérisé par le fait qu'une bobine de relais à bas potentiel ohmique est placée sur la connection (9) du circuit électrique extérieur (8).

Fig. 1

Fig. 2

Fig. 3

3

*Fig. 4*

Thermostrom

Zeit

*Fig. 5*